# EUROPEAN PATENT APPLICATION

(11) **EP 4 534 368 A1**
(43) Date of publication of application: **09.04.2025**
(21) Application number: 23201687.3
(22) Date of filing: 04.10.2023
(51) Int. Cl.: B60T 13/38, B60T 15/54

(54) **BRAKING A VEHICLE USING A NON-NEWTONIAN FLUID**

(71) Applicant: VOLVO TRUCK CORPORATION, 405 08 Göteborg (SE)
(72) Inventor: Subramanian, Chidambaram, Durham, 27705 (US); Newton, Robert, Greensboro, 274012236 (US)
(74) Representative: Valea AB

(57) **Abstract**

A pneumatic braking arrangement (20) for a vehicle (1) is provided. The pneumatic braking arrangement comprises (20) a parking brake (21) operative to brake the vehicle based on a first air pressure (11) for controlling a compression state of a spring (61) of the parking brake. The pneumatic braking arrangement comprises (20) a piston (36) and a chamber (35). The piston (36) is moveable within the chamber (35). The chamber (35) contains a Non-Newtonian Fluid, NNF (40). The pneumatic braking arrangement comprises (20) a brake valve (30) operative to push the piston (36) into the NNF (40) in response to a brake request (31). The pneumatic braking arrangement comprises (20) a control valve (37) operative to control the first air pressure (11). The control valve (37) is configured to release the first air pressure (11) dependent on a first force (F1) applied by the NNF (40) to the control valve (37).

## Description

### TECHNICAL FIELD

The disclosure relates generally to braking a vehicle. In particular aspects, the disclosure relates to braking a vehicle using a Non-Newtonian Fluid (NNF). The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In pneumatic braking, parking brakes are generally controlled by an Air Management System (AMS) and service brakes generally through Braking Systems (BS).

For pneumatic service brakes, it may take about 100 kilo Pascal (kPa) - 175 kPa to overcome resistance forces in the pneumatic brake system to start creating a braking force. The resistance forces may relate to from valve springs, wheel-end chamber springs, rubber, push rod to have the friction surface starting to touch a rotor, etc. Therefore, until reaching about 175 kPa, there will be no braking force generated.

In other words, there a delay in any braking scenario from the time of a brake request, e.g., the driver requests for braking by a foot valve, to when the braking force is actually generated.

Furthermore, pneumatic service brakes suffer from problems when there is an air leakage in the pneumatic system. This is since when there is an air leakage, there is no fallback alternative and the service brakes may in best case scenario brake by a reduced braking force, and being applied even slower.

To brake faster and to brake when air is not available, parking brakes may instead be used. This is since parking brakes brake by releasing air which is quicker than generating braking force by the service brakes. However it is not suitable to always brake using parking brakes as they are more prone to wear due to using spring forces and should therefore mostly be used for braking a parked vehicle, or in exceptional cases when the vehicle is in motion.

Hence, there is a strive to improve efficiency of braking using pneumatic braking arrangements.

### SUMMARY

According to a first aspect of the disclosure, a pneumatic braking arrangement for a vehicle is provided.

The pneumatic braking arrangement comprises a source of pressurized air. The pneumatic braking arrangement comprises a parking brake comprising a spring. The parking brake is operative to brake the vehicle based on a compression state of the spring. The pneumatic braking arrangement is configured to control the compression state of the spring based on a first air pressure supplied from the source of pressurized air. The pneumatic braking arrangement comprises a piston and a chamber. The piston is moveable within the chamber. The chamber contains an NNF. The pneumatic braking arrangement comprises a brake valve operative to push the piston into the NNF in response to a brake request applied to the brake valve. The pneumatic braking arrangement comprises a control valve operative to control the first air pressure. The control valve is fluidly connected with the chamber. The control valve is configured to release the first air pressure from the source of pressurized air dependent on a first force applied by the NNF to the control valve.

The first aspect of the disclosure may seek to improve efficiency of handling pneumatic braking arrangements.

A technical benefit may include improving efficiency of the pneumatic braking arrangement by enabling a fast brake response using a parking brake. This is since the first air pressure is released dependent on the first force applied by the NNF to the control valve which controls the compression state of the spring of the parking brake and thereby also controls the brake force to the vehicle. This can further be explained as follows. When the piston is applied to the NNF with a force greater than a threshold, the NNF will have increasing viscosity, e.g., behave like a solid, and when the piston is applied to the NNF with a force lower than a threshold, the NNF will have a low viscosity, e.g., behave like a fluid such as water. This behavior is a property of an NNF. It follows that, when the piston is pushed into the NNF with a high force, e.g., above a threshold, the NNF will behave as a solid and the resulting corresponding first force will thereby be high, e.g., above a threshold, and the force of the NNF will thereby be applied to the control valve for a first period of time while the NNF remains solid. When the piston is pushed into the NNF with a low force, i.e., zero or near zero below a threshold, the NNF will behave as a fluid and the resulting corresponding first force will be low and a force below a threshold, i.e., zero or near zero below a threshold, will be applied to the control valve.

In other words, when the force generated by the brake request is high, e.g., above a threshold, such as when the brake request is initiated by a quick and hard press on a brake pedal, the control valve will be applied with the first force above a threshold for the first time period, and thereby the control valve will release the first air pressure during the first time period when the NNF behaves as a solid. In this way, the braking arrangement can brake quicker using the parking brake than when using service brakes. This is since releasing the first air pressure to engage the spring of the parking brake to apply a brake force is quicker than to build up a pressure in service brakes to apply a brake force. Since the NNF will eventually decrease in viscosity and behave like a fluid after the first time period, the parking brakes will only be used for a short period of time, i.e., during the first time period, thereby limiting their wear, and allowing alternative slower response braking options to have time to build up during the first time period and take over with braking the vehicle if necessary.

Optionally in some examples, including in at least one preferred example, the pneumatic braking arrangement further comprises a service brake operative to, in response to the brake request, brake the vehicle by applying a second air pressure to the service brake.

A technical benefit may include a more efficient pneumatic brake arrangement. This is since the service brake pressure may start to build up while the parking brake is almost immediately applied, and as a consequence of that the NNF turns into fluid, the parking brake will not be applied or at least reduce in brake force, and the service brake can thereby smoothly take over the braking of the vehicle.

Optionally in some examples, including in at least one preferred example, the pneumatic braking arrangement is configured such that a brake force applied by the service brake is increasing during the first time period of applying the second air pressure.

A technical benefit may include a more efficient pneumatic brake arrangement. This is since the second air pressure will build up the service brake pressure during the first time period when the NNF has high viscosity, e.g., higher than a threshold, i.e., acts as a solid.

Optionally in some examples, including in at least one preferred example, the pneumatic braking arrangement is configured such that the NNF has a viscosity property causing the NNF to have an increased or maintained viscosity for at least the first time period when being pushed by the piston by a second force above a threshold.

A technical benefit may include a more efficient pneumatic brake arrangement. This is since the increased or maintained viscosity for at least the first time period when being pushed by the piston ensures that the parking brake is applied during the first time period. This is since when the second force is above a threshold and when the NNF has a high viscosity, the NNF is pressed by the piston to the control valve causing the control valve to release the first air pressure and thereby to apply the parking brake during the first time period.

The NNF may further be selected to have any suitable viscosity property, e.g., to match the first time period and/or the buildup of the second air pressure of the service brake.

Optionally in some examples, including in at least one preferred example, the pneumatic braking arrangement is configured such that a brake force of the vehicle is based on a viscosity property of the NNF.

A technical benefit may include a more efficient pneumatic brake arrangement. This is since the NNF may be selected such that there is a blend of brake force of the parking brake and the service brake, such that when the NNF decreases in viscosity, the first air pressure starts to build up in the parking brake again, thereby reducing a brake force of the parking brake. During the same time period, the second air pressure is built up such that the brake force of the service brake is increasing as the brake force of the parking brake is decreasing.

Optionally in some examples, including in at least one preferred example, the pneumatic braking arrangement is configured such that a brake force of the vehicle is limited by the control valve being configured to limit a release of the first air pressure such that the control valve is configured to release the first air pressure at most for the duration of a set second time period and/or such that the control valve is configured to release the first air pressure until a set minimum amount of air pressure is applied to the parking brake.

In other words, the release of the first air pressure is limited in time and/or amount.

A technical benefit may include a more efficient pneumatic brake arrangement.

This is since the brake force of the service brake may be efficiently blended with the brake force of the parking brake based on said limits. This avoids the parking brake braking at the same time as the service brake, and therefore avoiding the vehicle braking with a too high brake force, e.g., above a safety margin. Braking with a too high brake force above the safety margin may cause instability to the vehicle.

Optionally in some examples, including in at least one preferred example, the pneumatic braking arrangement comprises a motor operative to excite the NNF such that a viscosity of the NNF is increased or maintained. In these examples, exciting the NNF comprises applying a third force to the NNF using said motor. In these examples, the pneumatic braking arrangement is configured such that the motor is configured to excite the NNF in response to a trigger condition.

A technical benefit may include a more efficient pneumatic brake arrangement.

This is since if there is a leakage in the pneumatics such that the service brake cannot build up enough brake pressure in time, or at all, the NNF may be excited such that the piston can keep pressing the NNF towards the control valve with the first force, and thereby keep releasing the first air pressure and braking with the parking brake. In other words, this allows braking the vehicle even when pneumatics are broken or damaged.

Optionally in some examples, including in at least one preferred example, the motor is configured to excite the NNF by any one or more out of:
- vibrating the chamber,
- pushing a secondary piston into the chamber with a force increasing or maintaining the viscosity of the NNF, and
- driving a pump configured to drive and/or pulsate the piston into the NNF.

A technical benefit may include a more efficient pneumatic brake arrangement. This is since the NNF may be maintained by the applied force and thereby maintain the braking of the parking brake when needed.

Optionally in some examples, including in at least one preferred example, the NNF is a dilatant NNF.

A technical benefit may include a more efficient pneumatic brake arrangement.

This is since dilatant NNFs increase in viscosity with applied force and thereby the NNF may be pushed by the piston if the piston is pushed with a sufficient force, e.g., above a threshold.

Optionally in some examples, including in at least one preferred example, the brake valve is a footbrake valve connected with a brake pedal of the vehicle. In these examples, the brake request is a fourth force applied to the brake pedal. In these examples, the pneumatic braking arrangement is configured such that the piston is arranged to be pushed into the NNF with a second force dependent on said fourth force applied to the brake pedal.

In other words, the piston may be pushed into the NNF with a force based on the fourth force applied to the brake pedal.

A technical benefit may include a more efficient pneumatic brake arrangement.

This is since when the brake pedal is pressed rapidly and/or hard, indicating an emergency and/or a need for a quick brake response, the brake request will accordingly cause the NNF to be solid, and thereby release the first air pressure to quickly apply a brake force with the parking brake. When the brake pedal is pressed lightly, indicating a need for finer control of the vehicle motion, the brake request will accordingly be applied with a low fourth force, e.g., lower than a threshold, causing the piston to be pushed with a low second force, e.g., lower than a threshold, and the NNF will thereby behave as a fluid, and will not apply any force, or only a low first force, e.g., close to zero, such that the control valve will maintain or build up the first air pressure, and thereby not apply any brake force of the parking brake. Instead, the brake request will be applied by the service brake as usual, by the service brake building up a pressure according to the brake request and thereby braking the vehicle accordingly.

In other words, the NNF interacting with the brake request ensures that emergency braking will be handled immediately by the parking brake, and eventually blended by the service brake, and finally taken over completely by the service brake. The NNF may however be selected such that slow or small brake requests will not be handled by the parking brake at all, and will instead be handled by the service brake as usual.

According to a second aspect of the disclosure, a computer system comprising processing circuitry configured to handle the pneumatic braking arrangement according to the first aspect is provided. The pneumatic braking arrangement is comprised in a vehicle. The processing circuitry is configured to control the control valve to maintain or increase the first air pressure, wherein controlling the control valve is performed in response to any one or both of:
- detecting that a current brake force applied by the vehicle is above a threshold and/or
- obtaining an indication, e.g., a signal, indicative of a brake request and subsequently detecting that a predetermined time period since obtaining said indication has expired.

The second aspect of the disclosure may seek to improve efficiency of handling pneumatic braking arrangements.

A technical benefit may include a more efficient pneumatic brake arrangement.

This is since the first air pressure is not further released when the current brake force applied by the vehicle is above a threshold or when the indication has expired. This ensures that a brake force of the vehicle does not increase above the safety margin, and thereby the vehicle remains stable.

Optionally in some examples, including in at least one preferred example, the current brake force is a brake force applied by the parking brake, or a total brake force applied by the vehicle.

A technical benefit may include a more efficient pneumatic brake arrangement.

This is since the brake pressure of the parking brake, and accordingly also the first air pressure determining the brake pressure, may be limited according to the brake pressure of the parking brake or the total brake force of the vehicle to ensure that not a too high brake force is applied.

Optionally in some examples, including in at least one preferred example, the computer system is configured to excite an NNF of the pneumatic braking arrangement by applying a third force to the NNF using a motor comprised in the pneumatic braking arrangement.

A technical benefit may include a more efficient pneumatic brake arrangement. This is since when the service brakes are not generating a sufficient brake force, applying the third force to the NNF may comprise exciting the NNF such that a viscosity of the NNF is increased or maintained. This means that when the piston is pushed into the NNF, the NNF will maintain its viscosity and keep applying the first force to the control valve, and thereby keep releasing the first air pressure, e.g., until the current brake force reaches a threshold, e.g., a target brake force.

Optionally in some examples, including in at least one preferred example, exciting the NNF is performed in response to fulfilling a trigger condition comprising any one or more out of:
- a total brake force of the vehicle being below a threshold,
- a brake force of a service brake of the pneumatic braking arrangement being below a threshold, and
- a detected failure of the service brake of the pneumatic braking arrangement.

A technical benefit may include a more efficient pneumatic brake arrangement.

This is since a brake force is ensured to be applied by the vehicle, even if the service brakes are not supplying a brake force as intended.

According to a third aspect of the disclosure, a vehicle comprising the pneumatic braking arrangement of the first aspect is provided.

A technical benefit may correspond to the technical benefits of the first aspect.

Optionally in some examples, including in at least one preferred example, the vehicle further comprises the computer system of the second aspect.

The third aspect of the disclosure may seek to improve efficiency of handling pneumatic braking arrangements.

A technical benefit may correspond to the technical benefits of the second aspect.

According to a fourth aspect of the disclosure, a computer-implemented method for handing a pneumatic braking arrangement according to the first aspect is provided.

The method comprises, by a processing circuitry of a computer system, controlling the control valve to maintain or increase the first air pressure, wherein controlling the control valve is performed in response to any one or both of:
- detecting that a current brake force applied by the vehicle is above a threshold and/or
- obtaining an indication indicative of a brake request and subsequently detecting that a predetermined time period since obtaining said indication has expired.

The fourth aspect of the disclosure may seek to improve efficiency of handling pneumatic braking arrangements.

A technical benefit may include a more efficient pneumatic brake arrangement.

This is since the first air pressure is not further released when the current brake force applied by the vehicle is above a threshold or when the time period has expired. This ensures that a brake force of the vehicle does not increase above the safety margin, and thereby the vehicle remains stable.

Optionally in some examples, including in at least one preferred example, the method comprises, by the processing circuitry of the computer system, exciting the NNF of the pneumatic braking arrangement by applying a third force to the NNF using a motor comprised in the pneumatic braking arrangement.

A technical benefit may include a more efficient pneumatic brake arrangement. This is since when the service brakes are not generating a sufficient brake force, applying the third force to the NNF may comprise exciting the NNF such that a viscosity of the NNF is increased or maintained. This means that when the piston is pushed into the NNF, the NNF will maintain its viscosity and keep applying the first force to the control valve, and thereby keep releasing the first air pressure, e.g., until the current brake force reaches a threshold, e.g., a target brake force.

According to a fifth aspect of the disclosure, a computer program product is provided. The computer program product comprises program code for performing, when executed by the processing circuitry, the method of the fourth aspect.

The fifth aspect of the disclosure may seek to improve efficiency of handling pneumatic braking arrangements.

A technical benefit may correspond to the technical benefits of the first aspect.

According to a sixth aspect of the disclosure, a non-transitory computer-readable storage medium is provided. The non-transitory computer-readable storage medium comprises instructions, which when executed by the processing circuitry, cause the processing circuitry to perform the method of the fourth aspect.

The sixth aspect of the disclosure may seek to improve efficiency of handling pneumatic braking arrangements.

A technical benefit may correspond to the technical benefits of the first aspect.

Any one or more out of the first to sixth aspects and respective examples may be combined in any suitable manner.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
**FIG. 1** is an exemplary vehicle according to an example.
**FIG. 2** is an exemplary pneumatic braking arrangement according to an example.
**FIG. 3** is an exemplary pneumatic braking arrangement according to an example.
**FIG. 4** is an exemplary line diagram illustrating braking in a pneumatic braking arrangement according to an example.
**FIG. 5** is an exemplary vehicle comprising a pneumatic braking arrangement according to an example.
**FIG. 6** is an exemplary pneumatic braking arrangement according to an example.
**FIG. 7** is an exemplary pneumatic braking arrangement according to an example.
**FIG. 8** is a flow chart of an exemplary method according to an example.
**FIG. 9** is a flow chart of an exemplary method according to an example.
**FIG. 10** is another view of **FIG. 1****,** according to an example.
**FIG. 11** is a schematic diagram of an exemplary computer system for implementing examples disclosed herein, according to an example.

The drawings are schematic and not drawn to scale.

### DETAILED DESCRIPTION

The detailed description set forth below provides information and examples of the disclosed technology with sufficient detail to enable those skilled in the art to practice the disclosure.

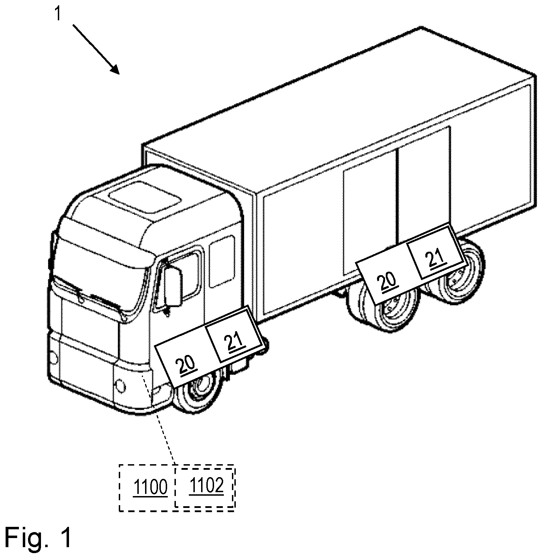

**FIG. 1** is an exemplary **vehicle 1** according to an example.

While FIG. 1 illustrates a truck, the vehicle 1 may be any suitable vehicle such as a heavy duty vehicle, a bus, a car, a truck, a tractor, a working machine, etc.

The vehicle 1 comprises a **pneumatic braking arrangement 20.**

The pneumatic braking arrangement 20 may be arranged to brake the vehicle 1 when the vehicle is in motion, e.g., in response to a brake request from a brake pedal or from any other suitable system or entity for requesting that the vehicle 1 shall brake.

The pneumatic braking arrangement 20 may be configured for braking any one or more axles of the vehicle 1, e.g., for braking each wheel of each axle.

The pneumatic braking arrangement 20 may comprise a **parking brake 21.**

The parking brake 21 may be pneumatic parking brake which is operative to apply a brake force by releasing an air pressure acting on a spring of the parking brake 21. The spring of the parking brake 21 may also be referred to as a brake spring.

Methods herein may be performed by a **computer system 1100** and/or a **processing circuitry 1102.**

The computer system 1100 and/or the processing circuitry 1102 may be comprised in the vehicle 1, or comprised in a remote location such as in a server or in a cloud service.

The computer system 1100 and/or a processing circuitry 1102 may be communicatively connected to any suitable entity of the vehicle 1. In other words, the computer system 1100 and/or a processing circuitry 1102 may be able to control and/or communicate with any suitable entity of the vehicle 1.

The computer system 1100 and/or a processing circuitry 1102 may be, or be part of, or comprise an Electronic Control Unit (ECU) of the vehicle 1.

The computer system 1100 and/or a processing circuitry 1102 may be, or be part of, or comprise an AMS of the vehicle 1, e.g., at least partly controlling the parking brake 21.

The computer system 1100 and/or a processing circuitry 1102 may be, or be part of, or comprise a BS of the vehicle 1, e.g., controlling one or more service brakes of the vehicles. The BS may control the one or more service brakes electronically.

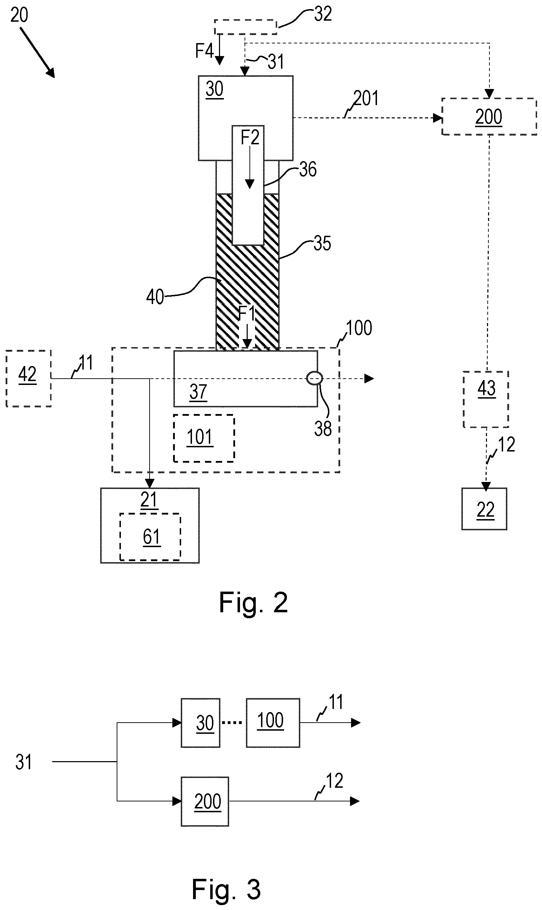

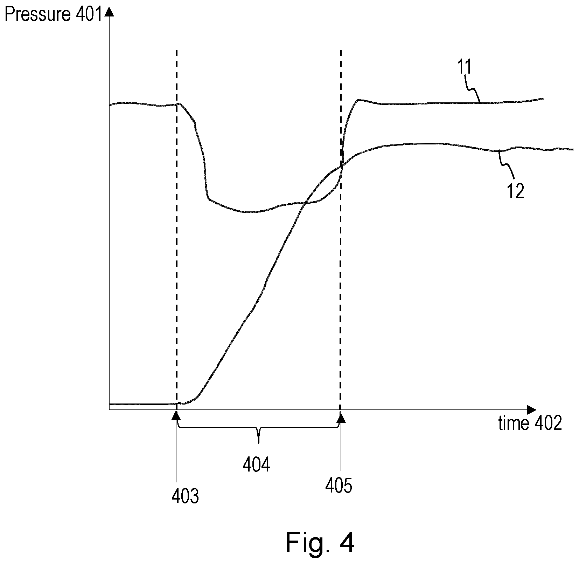

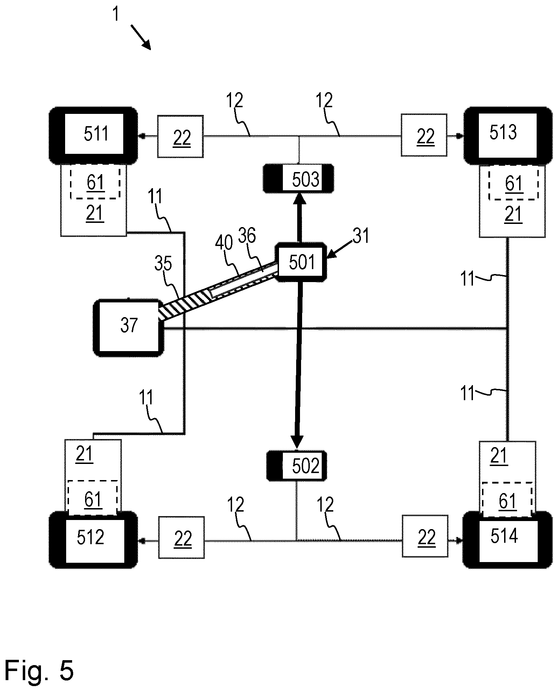

The pneumatic braking arrangement 20 will now further be described in **FIGS. 2-****3,** and then with further additional examples and/or alternatives in FIGS. 4a-c, and **FIG. 5****.**

**FIG. 2** illustrates the pneumatic braking arrangement 20 according to one example.

The pneumatic braking arrangement 20 comprises a **source of pressurized air 42.**

The source of pressurized air 42 may be any one out of an air pump, an air tank, a compressor, or any suitable device for supplying an air pressure for pneumatic braking.

The pneumatic braking arrangement 20 comprises a parking brake 21.

The parking brake 21 comprises a **spring 61.** The spring 61 may be a mechanical spring, such as a compression spring or any other suitable spring and/or other entity, e.g., for pressing back at least part of a parking brake for mitigating application of a brake force until an associated pressure is released.

The parking brake 21 is operative to brake the vehicle 1 based on a compression state of the spring 61. By way of example, the spring 61 may, when extended, press against the wheel, i.e., apply a force on the wheel. In embodiments and examples herein, the spring 61 may be referred to as extended when a brake force is applied by the parking brake 21, i.e., when the spring 61 is not fully compressed and/or when the spring 61 is in its equilibrium state.

The spring 61 may, when extended, apply a force against a brake entity, e.g., a push rod, which in turn is arranged to be pressed against the wheel or otherwise apply a brake force to the wheel.

The spring 61 may be configured to, when compressed to an initial state, not apply a force to the wheel or the brake entity, or to apply a reduced force to the wheel or brake entity, thereby applying no brake force or a reduced brake force to the wheel, compared to when the spring 61 is extended.

The pneumatic braking arrangement 20 is configured to control the compression state of the spring 61 based on a **first air pressure 11** supplied from the source of pressurized air 42, wherein the first air pressure 11 acts on the spring 61 so as to compress the spring 61.

The compression state of the spring 61 may relate to whether the spring 61 is extended or compressed. Extending the spring 61 increases a force applied by the spring 61, thereby increasing a brake force of the parking brake 121, i.e., when the first air pressure 11 is released or partly released.

The pneumatic braking arrangement 20 may be operative to, in an initial state, be applied with the first air pressure 11 from the source of compressed air 42 to act on the spring 61 of the parking brake 21, thereby keeping the spring 61 of the parking brake 21 in a compressed state, ensuring that there is no brake force applied by the parking brake 21.

The parking brake 21 may further be operative to apply a brake force when the first air pressure 11 is released from the source of pressurized air 42, causing the spring 61 to extend, e.g., to or towards an equilibrium state, and thereby apply a force to the wheel and/or brake entity, e.g., a push rod braking the respective wheel, thereby causing a parking brake force.

Releasing the first air pressure 11 herein may mean to release the first air pressure 11 from the source of pressurized air 42, such that the first air pressure no longer acts on the spring 61.

When the first air pressure 11 is not released, it may be built up over time, thereby compressing the spring 61 of the parking brake 21, reducing a force applied by the spring 61.

In other words, the pneumatic braking arrangement 20 may be arranged such that the first air pressure 11 is applied to the parking brake 21 when a brake force is not applied by the parking brake 21, e.g., by compressing the spring 61 of the parking brake 21. To brake the vehicle 1 using the parking brake 21, the first air pressure 11 may be released. The more and/or longer the first air pressure 11 is released, the more brake force may be applied by the parking brake 21, at least until a maximum amount of brake force is applied and/or until all pressure of the first air pressure 11 is released.

The pneumatic braking arrangement 20 comprises a **piston 36** and a **chamber 35.**

The piston 36 is moveable within the chamber 35. The chamber 35 contains a **NNF 40.**

In some examples, the piston 36 is configured such that the NNF 40 is able to flow around the piston 36 as the piston 36 is positioned within the chamber 35, e.g., when the NNF 40 has a viscosity below a threshold, such as when the NNF 40 behaves as a fluid.

The pneumatic braking arrangement 20 comprises a **brake valve 30** operative to push the piston 36 into the NNF 40 in response to a brake request 31 applied to the brake valve 30.

A force acted upon the piston 36 when pushed into the NNF 40 may be based on a force of the brake request 31, e.g., as applied mechanically and/or as requested electronically as part of the brake request 31.

The brake valve 30 may be a mechanically and/or electrically operated valve.

For example, the brake valve 30 may be a footbrake valve connected with a **brake pedal 32** of the vehicle 1. The brake request 31 may be a **fourth force F4** applied to the brake pedal 32. The pneumatic braking arrangement 20 may further be configured such that the piston 36 is arranged to be pushed into the NNF 40 with a **second force F2** dependent on said fourth force applied to the brake pedal 32.

The brake request 31 may as an alternative be an electronically triggered request from a vehicle ECU or other suitable entity of the vehicle 1, e.g., as generated based on a message, e.g., a signal, from an autonomous system, a remote control system, a user request, or a safety system.

The brake request 31 may be an emergency brake request.

The brake request 31 may be a rapid and/or hard brake request, e.g., as part of a brake pedal being rapidly pressed with a force above a threshold.

The pneumatic braking arrangement 20 comprises a **control valve 37** operative to control the first air pressure 11. The control valve 37 may be operative to release the first air pressure 11, acting on the parking brake 21, from the source of pressurized air 42.

The control valve 37 is fluidly connected with the chamber 35.

The control valve 37 may be fluidly connected with the source of pressurized air 42. As an alternative, the control valve 37 may comprise the source of pressurized air 42.

The control valve 37 is configured to release the first air pressure 11 from the source of pressurized air 42 dependent on a **first force F1** applied by the NNF 40 to the control valve 37. This means that based on the first force F 1, the parking brake 21 may be braked with a corresponding brake force.

In some examples, increasing or maintaining a release of the first air pressure 11 over a period of time, e.g., based on the NNF 40 viscosity, causes an increase or maintenance in a brake force of the parking brake 21. This is since if the first air pressure 11 is continuously released, a brake force of the parking brake 21 may still be applied. The vehicle 1 may thereby brake until the NNF 40 acts as a solid, e.g., until other brakes can take over braking.

In some examples, when the brake request 31 is jerky or has a large force, e.g., above a threshold, the NNF 40 may thereby turn more solid, and thereby, when the piston 36 pushes into the NNF 40, the NNF 40 will in turn act on the control valve 37.

In some examples, the control valve 37 is configured to release the first air pressure 11 when the first force F 1 is above a threshold, also referred to as activating the control valve 37.

The pneumatic braking arrangement 20 may further comprise a **service brake 22.**

The service brake 22 may be operative to, in response to the brake request 31, brake the vehicle 1 by applying a **second air pressure 12** to the service brake 22.

The second air pressure 12 may be supplied by a second source of pressurized air 43.

The service brake 22 and/or the second air pressure 12 may be controlled by a BS 200. The BS 200 may be a braking system for controlling the service brake 22 by electronic means and/or by pneumatic means. In some examples, hydraulic brakes may be an alternative for the service brake 22 and/or the BS 200.

The BS 200 may be configured to, based on the brake request 31 and/or based on a BS control message 201, e.g., a signal, transmitted by the control valve 30, control the second air pressure 12 and/or the service brake 22 such that the service brake 22 will build up an air pressure to start applying a brake force after an initialization period.

In other words, the pneumatic braking arrangement 20 may initiate a braking of the vehicle 1 based on the brake request 31. Initiating braking of the vehicle 1 may comprise initiating braking of the service brake 22, e.g., using the BS 200, and possibly also the parking brake 21, if the resulting first force F1 is sufficiently high to activate the control valve 37 to release the first air pressure 11. If the resulting first force F1 is too low, the brake request 31 is considered a normal brake request and faster brake response is not needed, and the parking brake 21 will not be applied.

The pneumatic braking arrangement 20 may be configured such that a brake force applied by the service brake 22 is increasing during a first time period of applying the second air pressure 12. The first period of time may align with a time period that the control valve 37 releases the first air pressure 11.

In some examples, the pneumatic braking arrangement 20 may be configured such that the NNF 40 has a viscosity property causing the NNF 40 to have an increased or maintained viscosity for at least the first time period when being pushed by the piston 36 by the second force F2, e.g., when the second force F2 is above a threshold. In this way, the pneumatic braking arrangement 20 may be configured to blend the parking brake force and the service brake force such that initially the parking brake force is high, and when the NNF loses viscosity at the end of the first time period, the second air pressure 12 has had time to build up in the service brake 22 such that a service brake force will compensate for a decrease in parking brake force.

In other words, the NNF 40 may provide the first force F1 to the control valve 37 for the first time period. This is since the piston 36 will act on the NNF 40 as a solid (or at least partly as a solid), instead of pressing through the NNF 40 as if it was a low viscosity fluid such as water.

In any examples herein, the first time period may be predefined, e.g., based on the viscosity property of the NNF 40.

In some examples, the pneumatic braking arrangement 20 may be configured such that a brake force of the vehicle 1 is based on a viscosity property of the NNF 40. In this way, blending of brake forces of the parking brake 21 and the service brake 22 may be accurately configured, i.e., as the viscosity property of the NNF 40 may determine how long the first force F1 can be applied to the control valve 37 and thereby also determines how long and how much the parking brake 21 will apply a brake force due to the release of the first air pressure 11.

In some examples, the brake force of the vehicle 1 may further be based on one or more mechanical configurations of the vehicle, e.g., any one or more out of: size and dimensions of the piston 36, size and dimensions of the chamber 35, and a spring constant of the parking brake 21.

The NNF 40 may be a dilatant NNF. The NNF 40 may be selected to have viscosity properties to match one or more brake blending and/or timing requirements, e.g., of examples herein.

In some examples, the pneumatic braking arrangement 20 may be configured such that a brake force of the vehicle 1 is limited by the control valve 37.

As an example, the control valve 37 may be configured to limit a release of the first air pressure 11.

The control valve 37 may for example be configured to release the first air pressure 11 at most for the duration of a set second time period. Additionally or alternatively the control valve 37 may be configured to release the first air pressure 11 until a set minimum amount of air pressure is applied to the parking brake 21.

In other words, a maximum total brake force of the vehicle 1 and/or a maximum brake force of the parking brake 21 may be limited to be below a safety margin e.g., to ensure vehicle stability.

In this way, it is ensured that when the service brake 22 starts to apply a brake force, the pneumatic braking arrangement will be configured to stop releasing the first air pressure 11 to avoid braking with a too high total brake power of the vehicle 1. A too high brake power of the vehicle 1, e.g., above a safety margin, may risk that the vehicle 1 becomes unstable and difficult to control, as well as induces excessive wear.

The pneumatic braking arrangement 20 may apply a brake force, e.g., up to a target brake force or within a target interval, as long as the brake request 31 is applied to the brake valve 30, e.g., as long as a brake pedal is pressed down. The pneumatic braking arrangement 20 may be configured to apply the brake force, e.g., up to a target brake force or to be within the target interval, by blending the brake force of the parking brake 21 and the brake force of the service brake 22, e.g., as a result of the NNF viscosity property.

To release the first air pressure 11, the control valve 37 may be coupled to, or part of an **AMS 100.** The AMS 100 may control a compression state of the spring 61 of the parking brake 21 by releasing the first air pressure 11. The AMS 100 may further comprise an **exhaust 38** for releasing the first air pressure 11. When the AMS 100 and the control valve 37 releases the first air pressure 11 from the source of pressurized air 42, e.g., out via the exhaust 38, the first air pressure 11 drops, and the spring 61 of the parking brake 21 will be less pressurized, thereby a compression state of the spring 61 of the parking brake 21 will allow the spring 61 to expand such that a brake force of the parking brake 21 will start to apply, and further increase and/or be maintained as the first air pressure 11 is released.

In other words, in some examples herein, the pneumatic brake arrangement 20 may be operative to release the air pressure 11 from the source of pressurized air 42 by releasing air from the source of pressurized air to the exhaust 38, thereby allowing the spring 61 to apply a brake force to the wheel of the vehicle 1.

In some examples, the source of pressurized air 42 providing the first air pressure 11 may additionally provide the second air pressure 12, e.g., as part of the second pressure source 43.

When the first air pressure 11 is no longer released, the source of pressurized air 42 may start to rebuild a pressure acting on the spring 61 in the parking brake 21, thereby reducing or stopping a brake force of the parking brake 21.

Besides controlling the release of the first air pressure 11 based on the first force F1, the AMS 100 may further comprise a **control system 101** which may be configured to control the release of the first air pressure 11 of examples herein.

The control system 101 may for example be configured to maintain a release of the first air pressure 11 if detecting any one or more out of:
- that the service brake 22 is not supplying enough brake force,
- that the second air pressure 12 is too low, lower than a threshold,
- that a total brake force of the vehicle 1 is below a threshold,
- a failure of the service brake 22 of the pneumatic braking arrangement 20.

In this way, it may be ensured that the pneumatic braking arrangement 20 is able to apply a maintained brake force.

The control system 101 may for example be operative to stop or reduce a release of the first air pressure 11 if or when detecting any one or more out of:
- that a current brake force applied by the vehicle 1 is above a threshold, and/or
- that a predetermined time period, e.g., the first time period, since a brake request 31 was applied to the brake valve 30, has expired.

In this way, it may be ensured that the parking brake force does not add with the service brake force to be above a safety margin.

The control system 101 may be an ECU, a computer system, or a processing circuitry. The control system may be, may be part of, and/or be controlled by, the computer system 1100 and/or the processing circuitry 1102.

In some examples, the pneumatic braking arrangement 20 may further comprise means for pressing the piston 36 to an initial position. For example, a return spring may be mounted in the chamber 35, pressing the piston 36 back to an initial position. Additionally or alternatively, the piston 36 may be attached with the brake pedal 32 such that a movement of the brake pedal 32 also directly affects the piston 36.

**FIG. 3** illustrates an overview of the pneumatic braking arrangement 20 according to an example. The brake request 31 may be an electronic message, e.g., a signal and/or indication, triggering or producing the fourth force F4 or the fourth force F4 may be produced mechanically as part of the brake request 31, e.g., by a brake pedal being pressed, which brake pedal is mechanically connected with the brake valve 30 and the BS 200 of the service brake 22.

In parallel, the BS 200 and the control valve 30 may start initiating braking of the vehicle 1. The control valve 30 may only result in the AMS 100 releasing the first air pressure 11 and applying a brake force using the parking brake 21 when the fourth force F4 is above a threshold, e.g., indicating a need for a rapid brake response. The BS 200 will start to build up the second air pressure 12 to start applying a brake force of the service brake 22. Due to that releasing air is quicker than building up the second air pressure 12 in the service brake 22, the parking brake 21 will start to brake before the service brake 22 can be applied. Due to the NNF 40 decreasing in viscosity after the first time period, the first air pressure 11 will stop being released as the NNF will no longer activate the control valve 30. The pneumatic braking arrangement 20 may be configured such that the service brake 22 will start applying when the first air pressure 11 stops being released, effectively blending the brake force of the parking brake 21 and the service brake 22. The selection of the NNF 40 may need to be performed with respect to the time for the service brake 22 to start applying its brake force to have a smooth brake blending function.

**FIG. 4** is an exemplary line diagram illustrating braking in a pneumatic braking arrangement 20 according to an example.

The Y-axis illustrates **pressure 401,** e.g., the first air pressure 11 and the second air pressure 12.

The X-axis illustrates **time 402.**

The first air pressure 11 is represented by a first line.

The second air pressure 12 is represented by a second line.

The brake request 31 is performed at a first time 403.

The first time period 404 illustrates a time period when the first air pressure is released, i.e., when the NNF 40 is pushed by the piston and remains in a high viscosity state, e.g., above a threshold, and behaves as a solid.

The second time 405 may be when the NNF 40 decreases in viscosity and thereby causing the release of the first air pressure 11 to stop, e.g., and be rebuilt to stop braking the parking brake 21. At the same second time 405, the second air pressure 12 may have been built up to such that the service brake 22 will start to apply a braking force.

The NNF 40 may be selected such that when the brake force of the parking brake 21 is decreasing and the brake force of the service brake 22 is increasing, a total brake force remains constant, or constant within an error margin.

In other word, the NNF 40 may be selected such that the viscosity property of the NNF 40 ensures that the NNF 40 stays solid for a time matching the time for the second air pressure 12 to build up for the service brake 22 to start applying a braking force.

**FIG. 5** is an exemplary vehicle comprising a pneumatic braking arrangement according to an example.

The vehicle 1 may comprise **wheels 511, 512, 513, 514.** The vehicle 1 may comprise a **footbrake valve 501,** i.e., a brake pedal or valve arranged to receive an electronic brake request, which is configured to generate the brake request 31.

The vehicle 1 may comprise **relays 502, 503,** for braking the service brake 22 of the wheels 511, 512, 513, 514, in response to the brake request 31, e.g., foot braking action and/or electronic signal. For example, the second air pressure 12 may be initiated by the footbrake valve 501 through the relays 502, 503, to the service brake 22 of the wheels 511, 512, 513, 514.

The vehicle may comprise the chamber 35 and the control valve 37. In response to the brake request 31, the footbrake valve 501 may impose the first force F1 on the piston 36 to be pushed into the chamber 35. If the first force F1 is greater than a threshold, the NNF 40 of the chamber will behave as a solid and impose a second force F2 greater than a threshold to the control valve 37, causing the control valve 37 to release the first air pressure 11, and thereby brake the parking brake 21, as long as the NNF 40 remains with a high viscosity, e.g., behaves as a solid, and as long as the piston 36 is pushing the NNF 40 in the chamber 35.

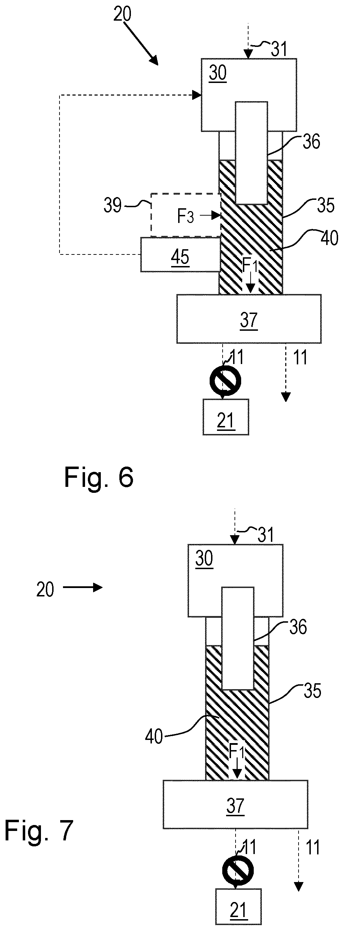

**FIG. 6** is the pneumatic braking arrangement 20 using a **motor 45** according to an example. The pneumatic braking arrangement 20 may e.g., be the pneumatic braking arrangement 20 described with respect to FIG. 1.

In some examples, the pneumatic braking arrangement 20 comprises the motor 45 operative to excite the NNF 40 such that a viscosity of the NNF 40 is increased or maintained. In these examples, exciting the NNF 40 comprises applying a **third force F3** to the NNF 40 using said motor 45. In these examples, the pneumatic braking arrangement 20 is configured such that the motor 45 is configured to excite the NNF 40 in response to a trigger condition.

In some examples, the motor 45 is configured to excite the NNF 40 by any one or more out of:
- vibrating the chamber 35,
- pushing a secondary piston 36 into the chamber 35 with a force increasing or maintaining the viscosity of the NNF 40, and
- driving a pump configured to drive and/or pulsate the piston 36 into the NNF 40.

In other words, the brake request 31 may cause the brake valve 30 to push the piston 36 into the NNF 40 of the chamber 35, such that the NNF 40 increases its viscosity to act as a solid and further apply the first force F1 to the control valve 37 such that the control valve 37 is activated to release the first air pressure 11, causing the parking brake 21 to brake accordingly. When the trigger condition is fulfilled, the third force F3 is further, e.g., repeatedly, applied to the NNF 40 by the motor 45 such that the NNF is maintained in a solid, thereby maintaining the braking of the parking brake 21.

**FIG. 7** is the pneumatic braking arrangement 20 according to an example.

In one example, the brake request 31 may cause the brake valve 30 to push the piston 36 into the NNF 40 of the chamber 35, such that the NNF 40 increases its viscosity to act as a solid and further apply the first force F1 to the control valve 37 such that the control valve 37 is activated to release the first air pressure 11, and consequently cause the parking brake 21 to apply a brake force according to the release of the first air pressure 11. This example may be combined with any one or more other examples herein.

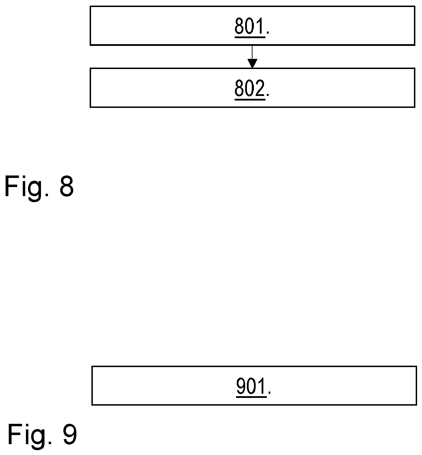

**FIG. 8** illustrates a computer-implemented method for handling the braking arrangement 20. The methods below may be combined with any of the Examples herein, in any suitable order. The below actions may be performed by the processing circuitry 1102 and/or the computer system 1100.

### Action 801.

The method comprises controlling the control valve 37 to maintain or increase the first air pressure 11. Controlling the control valve 37 may be performed in response to any one or both of:
- detecting that a current brake force applied by the vehicle 1 is above a threshold and/or
- obtaining an indication, e.g., a signal, indicative of a brake request 31 and subsequently detecting that a predetermined time period since obtaining said message has expired.

The current brake force may be a brake force applied by the parking brake 21, or a total brake force applied by the vehicle 1.

Detecting may comprise estimating the total brake force based on the first air pressure 11, and optionally based on the second air pressure 12.

The air pressure 11, may for example be mapped to the brake force applied by the parking brake 21, e.g., based on a predefined lookup table.

The second air pressure 12, may be mapped to the brake force applied by the service brake 22 e.g., based on the predefined lookup table.

The air pressure 11, and the second air pressure 12 may be mapped to the total brake force applied by the vehicle 1, e.g., based on the predefined lookup table.

Other ways of obtaining the respective brake forces may also apply, e.g., by means of sensors comprised in the braking arrangement 20 and/or comprised in the vehicle 1.

Maintaining or increasing the first air pressure 11 may be performed such that the first air pressure 11 is greater than 0, i.e., the first air pressure 11 may be a pressure applied to the parking brake 21 such that the parking brake 21 is at least not increasing its braking force and/or is decreasing its braking force.

In this way, the current brake force may be limited to a safe brake force when the current brake force is the parking brake force.

Furthermore, this may also limit the parking brake 21 brake force when the service brake 22 starts to brake enough, i.e. when the current brake force is a total brake force.

In this way, it is ensured that the first air pressure 11 is not continued to be released, thereby avoiding an increase in braking force applied by the parking brake 21, and thereby avoiding increasing the total braking force by more than what is considered safe or optimal.

### Action 802.

The method may comprise exciting 802 the NNF 40 of the braking arrangement 20 by applying a third force to the NNF 40 using a motor 45 comprised in the braking arrangement 20.

Action 802 may be performed in response to detecting that a current brake force applied by the vehicle 1 is below a threshold, e.g., the threshold of action 801, or a lower threshold, e.g., indicating that the service brakes are not generating a sufficient brake force.

Applying the third force to the NNF 40 may comprise exciting the NNF 40 such that a viscosity of the NNF 40 is increased or maintained. This means that when the piston 36 is pushed into the NNF 40, the NNF 40 will maintain its viscosity and keep applying the first force F1 to the control valve 37, and thereby control the first air pressure 11, e.g., by releasing the first air pressure 11 until the current brake force reaches a threshold, e.g., a target brake force.

Exciting the NNF 40 may comprise applying a third force to the NNF 40 using the motor 45. The method may comprise controlling the motor 45 to excite the NNF 40 in response to a trigger condition.

The trigger condition may comprise any one or more out of:
- a total brake force of the vehicle 1 being below a threshold,
- a brake force of a service brake 22 of the pneumatic braking arrangement 20 being below a threshold, and
- a detected failure of the service brake 22 of the pneumatic braking arrangement 20.

The method may comprise operating the motor 45 to excite the NNF 40 by any one or more out of:
- vibrating the chamber 35,
- pushing a secondary piston 36 into the chamber 35 with a force increasing or maintaining the viscosity of the NNF 40, and
- driving a pump configured to drive and/or pulsate the piston 36 into the NNF 40.

**FIG. 9** is a flow chart of a method according to an example. A computer-implemented method for handling a braking arrangement 20 is provided. The method may be combined with actions 801-802 above and/or any suitable examples herein.

### Action 901.

The method comprises, by a processing circuitry 1102 of a computer system 1100, controlling the control valve 37 to maintain or increase the first air pressure 11.

In this example, controlling the control valve 37 is performed in response to any one or both of:
- detecting that a current brake force applied by the vehicle 1 is above a threshold and/or
- obtaining an indication, e.g., a signal, indicative of a brake request 31 and subsequently detecting that a predetermined time period since obtaining said indication has expired.

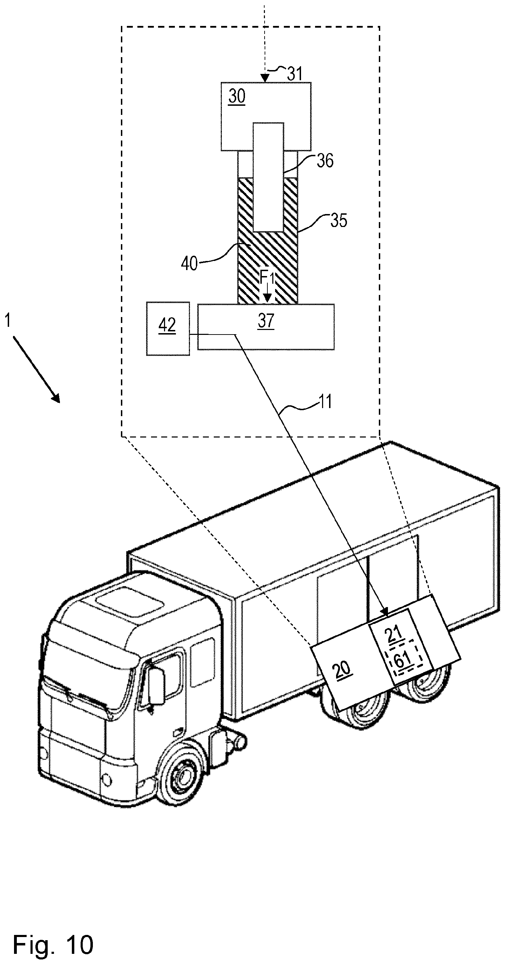

**FIG. 10** is another view of **FIG. 1****,** according to an example. The example of FIG. 10 may be combined with any other example herein.

A pneumatic braking arrangement 20 for a vehicle 1 is provided. The pneumatic braking arrangement 20 comprises:
- a source of pressurized air 42,
- a parking brake 21 comprising a spring 61, wherein the parking brake is operative to brake the vehicle 1 based on a compression state of the spring 61, and wherein the pneumatic braking arrangement 20 is configured to control the compression state of the spring 61 based on a first air pressure 11 supplied from the source of pressurized air 42,
- a piston 36 and a chamber 35, wherein the piston 36 is moveable within the chamber 35 and wherein the chamber 35 contains a Non-Newtonian Fluid, NNF, 40,
- a brake valve 30 operative to push the piston 36 into the NNF 40 in response to a brake request 31 applied to the brake valve 30,
- a control valve 37 operative to control the first air pressure 11 applied to the parking brake 21, wherein the control valve 37 is fluidly connected with the chamber 35.

The control valve 37 is configured to release the first air pressure 11 from the source of pressurized air dependent on a first force F 1 applied by the NNF 40 to the control valve 37.

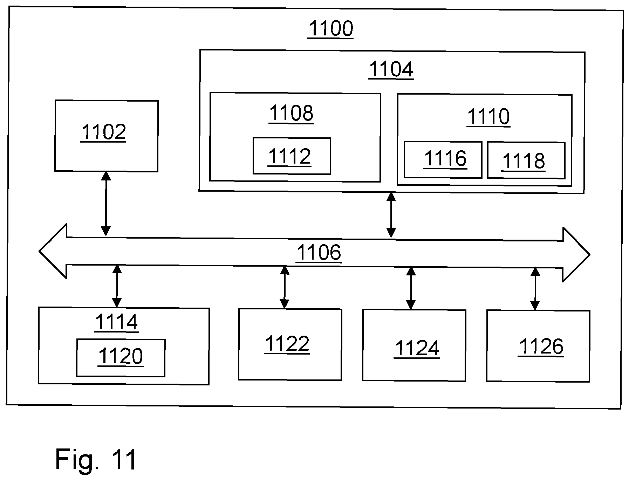

**FIG. 11** is a schematic diagram of the computer system **1100** for implementing examples disclosed herein. The computer system **1100** is adapted to execute instructions from a computer-readable medium to perform these and/or any of the functions or processing described herein. The computer system **1100** may be connected (e.g., networked) to other machines in a LAN, an intranet, an extranet, or the Internet. While only a single device is illustrated, the computer system **1100** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **1100** may comprise at least one computing device or electronic device capable of including firmware, hardware, and/or executing software instructions to implement the functionality described herein. The computer system **1100** may include the processing circuitry **1102** (e.g., processing circuitry including one or more processor devices or control units), a memory **1104,** and a system bus **1106.** The computer system **1100** may include at least one computing device having the processing circuitry **1102.** The system bus **1106** provides an interface for system components including, but not limited to, the memory **1104** and the processing circuitry **1102.** The processing circuitry **1102** may include any number of hardware components for conducting data or signal processing or for executing computer code stored in memory **1104.** The processing circuitry **1102** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **1102** may further include computer executable code that controls operation of the programmable device.

The system bus **1106** may be any of several types of bus structures that may further interconnect to a memory bus (with or without a memory controller), a peripheral bus, and/or a local bus using any of a variety of bus architectures. The memory **1104** may be one or more devices for storing data and/or computer code for completing or facilitating methods described herein. The memory **1104** may include database components, object code components, script components, or other types of information structure for supporting the various activities herein. Any distributed or local memory device may be utilized with the systems and methods of this description. The memory **1104** may be communicably connected to the processing circuitry **1102** (e.g., via a circuit or any other wired, wireless, or network connection) and may include computer code for executing one or more processes described herein. The memory **1104** may include non-volatile memory (e.g., read-only memory (ROM), erasable programmable read-only memory (EPROM), electrically erasable programmable read-only memory (EEPROM), etc.), and volatile memory **1110** (e.g., random-access memory (RAM)), or any other medium which can be used to carry or store desired program code in the form of machine-executable instructions or data structures and which can be accessed by a computer or other machine with processing circuitry **1102.** A basic input/output system (BIOS) **1112** may be stored in the non-volatile memory and can include the basic routines that help to transfer information between elements within the computer system **1100.**

The computer system **1100** may further include or be coupled to a non-transitory computer-readable storage medium such as the storage device **1114,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **1114** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **1114** and/or in the volatile memory **1110,** which may include an operating system **1116** and/or one or more program modules **1118.** All or a portion of the examples disclosed herein may be implemented as a computer program **1120** stored on a transitory or non-transitory computer-usable or computer-readable storage medium (e.g., single medium or multiple media), such as the storage device **1114,** which includes complex programming instructions (e.g., complex computer-readable program code) to cause the processing circuitry **1102** to carry out actions described herein. Thus, the computer-readable program code of the computer program **1120** can comprise software instructions for implementing the functionality of the examples described herein when executed by the processing circuitry **1102.** In some examples, the storage device **1114** may be a computer program product (e.g., readable storage medium) storing the computer program **1120** thereon, where at least a portion of a computer program **1120** may be loadable (e.g., into a processor) for implementing the functionality of the examples described herein when executed by the processing circuitry **1102.** The processing circuitry **1102** may serve as a controller or control system for the computer system **1100** that is to implement the functionality described herein.

The computer system **1100** may include an input device interface **1122** configured to receive input and selections to be communicated to the computer system **1100** when executing instructions, such as from a keyboard, mouse, touch-sensitive surface, etc. Such input devices may be connected to the processing circuitry **1102** through the input device interface **1122** coupled to the system bus **1106** but can be connected through other interfaces, such as a parallel port, an Institute of Electrical and Electronic Engineers (IEEE) 1394 serial port, a Universal Serial Bus (USB) port, an IR interface, and the like. The computer system **1100** may include an output device interface **1124** configured to forward output, such as to a display, a video display unit (e.g., a liquid crystal display (LCD) or a cathode ray tube (CRT)). The computer system **1100** may include a communications interface **1126** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Below follows a number of Examples which may respectively be combined with any one or more out of the above-mentioned examples in any suitable manner.

Example 1. A pneumatic braking arrangement 20 for a vehicle 1 comprising:
- a source of pressurized air 42,
- a parking brake 21 comprising a spring 61, wherein the parking brake 21 is operative to brake the vehicle 1 based on a compression state of the spring 61, and wherein the pneumatic braking arrangement 20 is configured to control the compression state of the spring 61 based on a first air pressure 11 supplied from the source of pressurized air 42,
- a piston 36 and a chamber 35, wherein the piston 36 is moveable within the chamber 35 and wherein the chamber 35 contains a Non-Newtonian Fluid, NNF, 40,
- a brake valve 30 operative to push the piston 36 into the NNF 40 in response to a brake request 31 applied to the brake valve 30,
- a control valve 37 operative to control the first air pressure 11, wherein the control valve 37 is fluidly connected with the chamber 35, and wherein the control valve 37 is configured to release the first air pressure 11 from the source of pressurized air (42) dependent on a first force F 1 applied by the NNF 40 to the control valve 37.

Example 2. The pneumatic braking arrangement 20 according to claim 1, further comprising a service brake 22 operative to, in response to the brake request 31, brake the vehicle 1 by applying a second air pressure 12 to the service brake 22.

Example 3. The pneumatic braking arrangement 20 according to claim 2, wherein the pneumatic braking arrangement 20 is configured such that a brake force applied by the service brake 22 is increasing during a first time period 405 of applying the second air pressure 12.

Example 4. The pneumatic braking arrangement 20 according to claim 2 or 3, wherein the pneumatic braking arrangement 20 is configured such that the NNF 40 has a viscosity property causing the NNF 40 to have an increased or maintained viscosity for at least a first time period 405 when being pushed by the piston 36 by a second force F2 above a threshold.

Example 5. The pneumatic braking arrangement 20 according to any preceding claim, wherein the pneumatic braking arrangement 20 is configured such that a brake force of the vehicle 1 is based on a viscosity property of the NNF 40.

Example 6. The pneumatic braking arrangement 20 according to any preceding claim, wherein the pneumatic braking arrangement 20 is configured such that a brake force of the vehicle 1 is limited by the control valve 37 being configured to limit a release of the first air pressure 11 such that the control valve 37 is configured to release the first air pressure 11 at most for the duration of a set second time period and/or such that the control valve 37 is configured to release the first air pressure 11 until a set minimum amount of air pressure is applied to the parking brake 21.

Example 7. The pneumatic braking arrangement 20 according to any preceding claim further comprising a motor 45 operative to excite the NNF 40 such that a viscosity of the NNF 40 is increased or maintained, wherein exciting the NNF 40 comprises applying a third force to the NNF 40 using said motor 45, and wherein the pneumatic braking arrangement 20 is configured such that the motor 45 is configured to excite the NNF 40 in response to a trigger condition.

Example 8. The pneumatic braking arrangement 20 according to claim 7 wherein the motor 45 is configured to excite the NNF 40 by any one or more out of:
- vibrating the chamber 35,
- pushing a secondary piston 36 into the chamber 35 with a force increasing or maintaining the viscosity of the NNF 40, and
- driving a pump configured to drive and/or pulsate the piston 36 into the NNF 40.

Example 9. The pneumatic braking arrangement 20 according to any preceding claim, wherein the NNF 40 is a dilatant NNF.

Example 10. The pneumatic braking arrangement 20 according to any preceding claim, wherein the brake valve 30 is a footbrake valve connected with a brake pedal 32 of the vehicle 1, and wherein the brake request 31 is a fourth force applied to the brake pedal 32, and wherein the pneumatic braking arrangement 20 is configured such that the piston 36 is arranged to be pushed into the NNF 40 with a second force dependent on said fourth force applied to the brake pedal 32.

Example 11. A computer system 1100 comprising processing circuitry 1102 configured to handle the pneumatic braking arrangement 20 according to any one of claims 1-10, the pneumatic braking arrangement 20 being comprised in a vehicle 1, and wherein the processing circuitry 1102 is configured to:
- control the control valve 37 to maintain or increase the first air pressure 11, wherein controlling the control valve 37 is performed in response to any one or both of:
- detecting that a current brake force applied by the vehicle 1 is above a threshold and/or
- obtaining an indication indicative of a brake request 31 and subsequently detecting that a predetermined time period since obtaining said indication has expired.

Example 12. The computer system 1100 according to claim 11, wherein the current brake force is a brake force applied by the parking brake 21, or a total brake force applied by the vehicle 1.

Example 13. The computer system 1100 according to any of claims 11-12, further configured to excite an NNF 40 of the pneumatic braking arrangement 20 by applying a third force to the NNF 40 using a motor 45 comprised in the pneumatic braking arrangement 20.

Example 14. The computer system 1100 of claim 13, wherein exciting the NNF 40 is performed in response to fulfilling a trigger condition comprising any one or more out of:
- a total brake force of the vehicle 1 being below a threshold,
- a brake force of a service brake 22 of the pneumatic braking arrangement 20 being below a threshold, and
- a detected failure of the service brake 22 of the pneumatic braking arrangement 20.

Example 15. A vehicle 1 comprising the pneumatic braking arrangement 20 of any of claims 1-10.

Example 16. The vehicle 1 of claim 15 further comprising the computer system of any of claims 11-14.

Example 17. A computer-implemented method for handling a pneumatic braking arrangement 20 according to any one of claims 1-10, the method comprising:
- by a processing circuitry 1102 of a computer system 1100, controlling 801, 901 the control valve 37 to maintain or increase the first air pressure 11, wherein controlling the control valve 37 is performed in response to any one or both of:
- detecting that a current brake force applied by the vehicle 1 is above a threshold and/or
- obtaining an indication indicative of a brake request 31 and subsequently detecting that a predetermined time period since obtaining said indication has expired.

Example 18. The method of claim 17, further comprising: by the processing circuitry 1102 of the computer system 1100, exciting 802 the NNF 40 of the pneumatic braking arrangement 20 by applying a third force to the NNF 40 using a motor 45 comprised in the pneumatic braking arrangement 20.

Example 19. A computer program product comprising program code for performing, when executed by the processing circuitry 1102, the method of any of claims 17-18.

Example 20. A non-transitory computer-readable storage medium comprising instructions, which when executed by the processing circuitry 1102, cause the processing circuitry 1102 to perform the method of any of claims 17-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A pneumatic braking arrangement (20) for a vehicle (1) comprising:
- a source of pressurized air (42),
- a parking brake (21) comprising a spring (61), wherein the parking brake (21) is operative to brake the vehicle (1) based on a compression state of the spring (61), and wherein the pneumatic braking arrangement (20) is configured to control the compression state of the spring (61) based on a first air pressure (11) supplied from the source of pressurized air (42),
- a piston (36) and a chamber (35), wherein the piston (36) is moveable within the chamber (35) and wherein the chamber (35) contains a Non-Newtonian Fluid, NNF, (40),
- a brake valve (30) operative to push the piston (36) into the NNF (40) in response to a brake request (31) applied to the brake valve (30),
- a control valve (37) operative to control the first air pressure (11), wherein the control valve (37) is fluidly connected with the chamber (35), and wherein the control valve (37) is configured to release the first air pressure (11) from the source of pressurized air (42) dependent on a first force (F 1) applied by the NNF (40) to the control valve (37).

2. The pneumatic braking arrangement (20) according to claim 1, further comprising a service brake (22) operative to, in response to the brake request (31), brake the vehicle (1) by applying a second air pressure (12) to the service brake (22).

3. The pneumatic braking arrangement (20) according to claim 2, wherein the pneumatic braking arrangement (20) is configured such that a brake force applied by the service brake (22) is increasing during a first time period (405) of applying the second air pressure (12).

4. The pneumatic braking arrangement (20) according to claim 2 or 3, wherein the pneumatic braking arrangement (20) is configured such that the NNF (40) has a viscosity property causing the NNF (40) to have an increased or maintained viscosity for at least a first time period (405) when being pushed by the piston (36) by a second force (F2) above a threshold.

5. The pneumatic braking arrangement (20) according to any preceding claim,
wherein the pneumatic braking arrangement (20) is configured such that a brake force of the vehicle (1) is based on a viscosity property of the NNF (40).

6. The pneumatic braking arrangement (20) according to any preceding claim,
wherein the pneumatic braking arrangement (20) is configured such that a brake force of the vehicle (1) is limited by the control valve (37) being configured to limit a release of the first air pressure (11) such that the control valve (37) is configured to release the first air pressure (11) at most for the duration of a set second time period and/or such that the control valve (37) is configured to release the first air pressure (11) until a set minimum amount of air pressure is applied to the parking brake (21).

7. The pneumatic braking arrangement (20) according to any preceding claim further comprising a motor (45) operative to excite the NNF (40) such that a viscosity of the NNF (40) is increased or maintained, wherein exciting the NNF (40) comprises applying a third force to the NNF (40) using said motor (45), and wherein the pneumatic braking arrangement (20) is configured such that the motor (45) is configured to excite the NNF (40) in response to a trigger condition.

8. The pneumatic braking arrangement (20) according to claim 7 wherein the motor (45) is configured to excite the NNF (40) by any one or more out of:
- vibrating the chamber (35),
- pushing a secondary piston (36) into the chamber (35) with a force increasing or maintaining the viscosity of the NNF (40), and
- driving a pump configured to drive and/or pulsate the piston (36) into the NNF (40).

9. The pneumatic braking arrangement (20) according to any preceding claim,
wherein the brake valve (30) is a footbrake valve connected with a brake pedal (32) of the vehicle (1), and wherein the brake request (31) is a fourth force applied to the brake pedal (32), and wherein the pneumatic braking arrangement (20) is configured such that the piston (36) is arranged to be pushed into the NNF (40) with a second force dependent on said fourth force applied to the brake pedal (32).

10. A computer system (1100) comprising processing circuitry (1102) configured to handle the pneumatic braking arrangement (20) according to any one of claims 1-9, the pneumatic braking arrangement (20) being comprised in a vehicle (1), and wherein the processing circuitry (1102) is configured to:
- control the control valve (37) to maintain or increase the first air pressure (11), wherein controlling the control valve (37) is performed in response to any one or both of:
∘ detecting that a current brake force applied by the vehicle (1) is above a threshold and/or
∘ obtaining an indication indicative of a brake request (31) and subsequently detecting that a predetermined time period since obtaining said indication has expired.

11. A vehicle (1) comprising the pneumatic braking arrangement (20) of any of claims 1-9, and optionally comprising the computer system (1100) according to claim 10.

12. A computer-implemented method for handling a pneumatic braking arrangement (20) according to any one of claims 1-9, the method comprising:
- by a processing circuitry (1102) of a computer system (1100), controlling (801, 901) the control valve (37) to maintain or increase the first air pressure (11), wherein controlling the control valve (37) is performed in response to any one or both of:
∘ detecting that a current brake force applied by the vehicle (1) is above a threshold and/or
∘ obtaining an indication indicative of a brake request (31) and subsequently detecting that a predetermined time period since obtaining said indication has expired.

13. The method of claim 12, further comprising:
- by the processing circuitry (1102) of the computer system (1100), exciting (802) the NNF (40) of the pneumatic braking arrangement (20) by applying a third force to the NNF (40) using a motor (45) comprised in the pneumatic braking arrangement (20).

14. A computer program product comprising program code for performing, when executed by the processing circuitry (1102), the method of any of claims 12-13.

15. A non-transitory computer-readable storage medium comprising instructions, which when executed by the processing circuitry (1102), cause the processing circuitry (1102) to perform the method of any of claims 12-13.
